# EUROPEAN PATENT SPECIFICATION

(11) **EP 2 414 141 B1**
(45) Date of publication and mention of the grant of the patent: **10.09.2014**
(21) Application number: 10711093.4
(22) Date of filing: 31.03.2010
(51) Int. Cl.: B27K 3/15, B27K 5/00, F26B 5/00, C08H 8/00

(54) **METHOD FOR TREATING LIGNOCELLULOSIC PARTS**
VERFAHREN ZUR BEHANDLUNG VON HOLZTEILEN
PROCÉDÉ DE TRAITEMENT DE PIÈCES EN BOIS

(30) Priority: 01.04.2009 EP 09157107
(43) Date of publication of application: 08.02.2012
(73) Proprietor: Nederlandse Organisatie voor Toegepast -Natuurwetenschappelijk Onderzoek TNO, 2628 VK Delft (NL)
(72) Inventor: HOMAN, Waldemar Jozef, NL-3911 PC Rhenen (NL); MENDOZA DE BRESSAN, Sandra M., NL-2624 LH Delft (NL); SMAKMAN, Robert, NL - 1393 NW Nigtevecht (NL)
(74) Representative: Jansen, Cornelis Marinus
(86) International application number: PCT/NL2010/050164
(87) International publication number: WO 2010/114371

(56) References cited:
- US-A- 3 406 038

## Description

The invention relates to a method for treating lignocellulosic parts.

Two of the most important advantages of wood are its aesthetics and the fact that it is bio-based and thus renewable. However, as any biological material, it has the disadvantage that it swells and shrinks with changing moisture contents and besides that it can be decayed by micro organisms. The general goal of lignocellulose modification is to improve these (and other) properties of the material and even to add new functionalities. Examples are hydrophobation, UV resistance, fire retardancy, etc. Modification of lignocellulosic materials is strongly emerging and will be developed to a great extent in the near future.

The size of the total market for sustainable lignocellulosic products is enormous. In the last decade it has become clear that the classical wood preservation is under heavy pressure by legislation (a/o Biocidal Products Directive) and by the public opinion. Besides that, the availability of high value tropical hardwoods is under pressure because of developments in sustainable forest management and emerging economies, especially China. In this playing field already a number of lignocellulose modification processes have found their way to the market. The raw material is often fast growing softwood. Here we mention the thermal processes such as Plato®. Stellac® and Thermowood®, which have a considerable loss in strength as major drawback and the chemical processes Kebony®, Accoya® en Belmadur®.

Chemical modification can achieve much more than thermal modification since properties can be achieved by choosing specific molecules that are added to the lignocellulosic material. For all existing processes there are some drawbacks. High costs for production is one of them. Also in the functionalizations there is still room for improvement. The ester bond in Accoya (i.e. acetylated wood), for instance, has the inconvenience that it can be hydrolyzed in alkaline conditions. Esterification of lignocelluloses, - as well as other chemical treatments - results in by-products that reduce the efficiency and increase the labour of the modification process.

A known modification process is etherification using epoxides. An ether bond could perform better than an ester bond. The reaction between epoxides and hydroxyl groups of the lignocellulose involves an initial reaction of a hydroxyl group and an epoxide molecule, generating an ether derivative that contains a new hydroxyl group. This new OH- group will be available for further reaction with another epoxide molecule giving rise to polymerization. The etherification reaction as such can be base or acid catalyzed and, most important; it does not produce by-products, which is a big advantage with respect to other chemical modifications. The ideal catalyst for this purpose should be effective at low reaction temperatures, easily removed after reaction, nontoxic and noncorrosive. Good candidates are weakly alkaline compounds.

However, all chemicals able to react with the hydroxyl groups of the lignocellulose can also react with the water that is naturally available in the lignocellulose structure. Epoxides are no exception and the reaction of an epoxide with water results in formation of glycol, oligomers and polymers as by-products. On the one hand, the water consumes an unacceptably high amount of epoxides from the point of view of commercial applications of a process. Furthermore, the by-products can be difficult to separate and regenerate to get the initial reagents at industrial scale. On the other hand, even if etherified moist lignocellulose can show very high initial dimensional stability, it decreases after consecutive water-soaked cycles, as shown in the literature, e.g. for propylene oxide. This result suggests that the functionalization initially achieved is not always stable when etherification is performed on moist lignocellulose.

In a known method, by Rowell and Gutzmer, a treatment consists in drying the wood in a first step and etherifying it with butylene oxide in a second step. The wood was dried to a low moisture content (lower than 7%) which can undesirably change the wood's volume by shrinking. Additionally, the flow of liquids (such as reagents) into the dried wood is greatly reduced with respect to swollen wood.

US 3,406,038 discloses treatment of wood, wherein a reaction of an alkylene oxide with a polyol and water is effected. Thus, the reaction itself requires the presence of water in the wood, the water being consumed during the reaction. This leads to wood stability degradation. Also, the method consumes a large amount of reagents, which is a major weakness from the point of view of commercial applications. Furthermore, it presents the disadvantage of forming undesired by-products (e.g. glycol, oligomers and polymers).

US 5,395,656 discloses a method and composition for treating wood utilizing an aqueous fluid composition. A main component of the preservative composition is water.

The present invention aims to solve the abovementioned problems. Particularly, the invention aims to provide an improved method for treating lignocellulose, wherein a durable, strong and dimensionally stable lignocellulose can be obtained.

According to the invention, these and other aspects are achieved by a method that includes:
- drying the lignocellulosic parts, the drying involving removing water to a water content lower than 5 w%,
   wherein the drying is achieved by applying at least one liquid drying agent that dissolves and/or at least partly replaces the water, the drying agent being a lignocellulose swelling agent; and
- after the drying, etherification of the dried lignocellulosic parts that are swollen by the liquid drying agent,
   wherein the drying agent includes a reagent for modification of the lignocellulosic parts, the modification being an epoxide based etherification.

It has been found that this method provides good results, and leads to a dimensionally stable, durable material, with improved mechanical properties. It has been found that, particularly in case the modification is an etherification of the wood with epoxides, relatively little (almost no) reaction by-product is available in the modified wood. A basic idea of the present invention is that at least part of the drying agent is left in the wood to maintain a certain swollen state of the wood, until (and preferably during) the subsequent modification step. Thus, shrinking and formation of cracks of the wood between the drying step and modification step is reduced or prevented in an efficient manner.

The present invention presents a method to etherify solvent-dried lignocellulosic material. It has been found that the material that is obtained by the invention presents great dimensional stability as compared with lignocellulosic parts that are treated according to prior art methods. The present method can minimize significant volume changes of the llignocellulosic parts as well as by-product formation.

The drying agent already includes or is a reagent for modification of the wood parts. As follows from the above, the drying of the lignocellulosic parts is a separate step, which does not yet lead to a chemical modification of the lignocellulose. Thus, during the drying, the reagent is preferably chemically inactive, e.g. it does not yet modify the lignocellulose but only mixes with water to remove the water from the wood. The subsequent modification (i.e. etherification) step can include the further application of a catalyst, to initiate a reaction between the lignocellulose and the reagent.

According to an advantageous elaboration, the drying and modification are carried out in the same treatment chamber or vessel, for example a reactor chamber. In this way, the condition of the lignocellulosic parts can be controlled accurately throughout the process, for example the content of a drying (swelling) agent in the lignocellulose, temperature and pressure. Particularly, in this way, the lignocellulosic material can be maintained in a constantly swollen state by a water replacing swelling agent, prior to the modification thereof.

According to an embodiment, the drying agent is a solvent, having a low reactivity under the conditions applied. Preferably, the drying agent is a non-hydroxylic drying agent, particularly a non-hydroxylic liquid drying agent. Preferably, the drying agent is a swelling agent for (the polar/hydrophilic) lignocellulose, for example with at least 10% (estimate) of the swelling power of water (and thus are polar/hydrophylic enough to dissolve enough water from the lignocellulose). According to a further embodiment, a solvent drying agent provides a flexibilizing effect that prevents crack formation in thick lignocellulosic parts in the drying process. The solvent can also serve to make the lignocellulose accessible for reagent molecules (and/or catalysts), which have too low polarity/hydrophilicity and/or too large size to swell/enter the lignocellulose sufficiently themselves. A solvent drying agent can also serve to remove a reagent and/or catalyst after the modification reaction

Also, according to a preferred embodiment, the drying agent is sufficiently volatile to be removed easily from the lignocellulose after the process.

For example, none-limiting examples of the components of the drying agent are.
- the lower epoxides propylene oxide and butylene oxide themselves (without catalyst), if used subsequently as reagent (in presence of catalyst); this opens possibilities for very simple and attractive processes;
- polar lower ethers, like ethylene glycol dimethylether (EGDME), tetrahydrofuran (THF) etc;
- lower ketones, like acetone, methylethylketone etc.;
- lower esters, like methyl-, ethyl-, propyl- and isopropylacetate etc.

Preferably, the liquid drying agent has substantially the same order of magnitude of lignocellulose swelling capabilities as lignocellulose swelling capabilities of water.

Good results have been obtained in case the water content of the wood is lower than 5 w%, preferably lower than 3 w%, more preferably lower than 1 w%, after the drying and before the modification is started. A swelling agent content of the wood can be significantly higher than 1 w% after the drying and before the modification is started, to counteract the removal of water, and particularly to prevent wood fractures (due to dimensional instabilities).

Further advantageous embodiments are described in the dependent claims. The invention will now be explained with reference to the non-limiting examples and the drawing. Therein shows:
Fig. 1 a flow chart of an embodiment of the invention.

As is depicted in the drawing, the present example of a method for treating lignocellulosic parts can include providing the lignocellulosic parts (step 100), a step 101 of drying the lignocellulosic parts (the drying involving removing water from the lignocellulose), and a step 102 of modification of the dried lignocellulosic parts. Examples include a chemical modification step 102, the modification being an epoxide based etherification (as will be described below).

Various types of lignocellulosic parts can be treated by the process. For example, a smallest external dimension of each of the lignocellulosic parts can be larger than 1 cm. A length of each of the lignocellulosic parts can be larger than 5 cm, for example larger than 1 m (particularly in case of commercial wood modification). The mass of each of the lignocellulosic parts can be larger than 0.01 kg, particularly larger than 0.1 kg, for example larger than 1 kg (for example: larger than 10 kg). The lignocellulose can be freshly cut, or it can be pre-treated (for example conditioned) before the drying step 101 is carried out. According to a further elaboration, before the drying step the wood parts can be moist, wherein a water content of the lignocellulose that is provided (step 100) can be higher than 5 w%, for example about 8-10 w%, or higher (for example over 25 w%).

### Drying

The drying step 101 can be carried out, for example, in a treatment chamber that can be sealed from an environment, for example a reactor. The drying step 101 can include the use of one or more drying agents (for example a mixture of at least two drying agents), to extract water from the lignocellulose. Advantageously, the drying agent used in the drying step 101 acts as a lignocellulosic swelling agent. Also, advantageously, the liquid drying agent dissolves and/or at least partly replaces the water (i.e. mixes with water). The process is carried out in such a manner, that the lignocellulose is still swollen by an amount of liquid drying agent (left in the lignocellulose after the drying step 101) when the lignocellulose is processed in the modification step. In particular, the amount of liquid drying (swelling) agent that is present in the lignocellulose after the drying step 101 counteracts lignocellulose shrinkage in a way to prevent lignocellulose rupture (i.e. cracks, splitting).

According to a further non-limiting embodiment, the liquid drying agent has substantially the same order of magnitude of lignocellulose swelling capabilities as lignocellulose swelling capabilities of water. Alternatively, the liquid drying agent can have a lignocellulose swelling capability that is higher or lower than the lignocellulose swelling capability of water, for example higher or lower by a factor in the range of 0.1-1.5

Besides, according to a preferred embodiment, the dimensions of the lignocellulosic parts remain substantially constant during the drying step 101, and during the subsequent modification step 102 (and a period between those steps 101, 102, if any). For example, the drying agent (i.e. swelling agent) is applied in such a way that the lignocellulose remains swollen to a certain degree (due to the swelling action of drying agent that has entered the lignocellulose), such that the lignocellulose does not rupture during both steps 101, 102. Also, in a further embodiment, the drying agent can replace the water in such a way that the lignocellulose does not shrink significantly (i.e. it does not shrink to the extent of lignocellulose structure damage).

Alternatively, a certain amount of lignocellulose shrinkage during the drying step 101 is allowed (for example by more than 1% in tangential direction). In that case, still, the drying (i.e. swelling) agent is used to replace the water and to swell the lignocellulose, such that the lignocellulose does not rupture during both the drying step 101 and the subsequent modification step 102 (and a period between those steps 101, 102, if any).

Also, in a further embodiment, a certain amount of lignocellulose expansion can be allowed during the drying step 101 (for example an expansion in the range of 0.1-5% in tangential direction), such, that the lignocellulose does not rupture during both the drying step 101 and the subsequent modification step 102 (and a period between those steps 101, 102, if any).

Therefore, up to and including the modification step 102, the lignocellulosic parts continuously contain swelling agent that swells the lignocellulose and prevents lignocellulose rupture: first the swelling agent water (before the drying step 101), and subsequently the drying agent that replaces the water and has lignocellulose swelling capabilities.

Subjecting the lignocellulosic parts to drying agent (for providing water extraction and replacement) can be achieved in various ways. According to a preferred example, the drying simply involves saturating the lignocellulosic parts with the drying agent. Also, for example, the lignocellulosic parts can be immersed, sprayed or rinsed with liquid drying agent, during a predetermined drying period, to achieve water removal. The drying can involve providing a bath of liquid drying agent, and laying or submersing the lignocellulose in the bath. According to a further example, water that is extracted from the lignocellulose by liquid drying agent is removed from the drying agent, via a separation step 106. Drying agent that is recovered in step 106 can be reused in the drying of the lignocellulose (step 101).

Preferably, during the drying step 101, the liquid drying (i.e. swelling) agent totally penetrates the lignocellulose, to reach any water that may be present in the lignocellulose (to dissolve, remove and replace the water), and to provide uniform distribution of drying agent induced lignocellulose swelling. More particularly, the drying step 101 can include:
a) -subjecting the lignocellulose to the drying agent, particularly to impregnate the lignocellulose with that drying agent to dissolve and replace water;
b) -removing only part of the drying agent from the wood, such that a remaining amount of drying agent (left in the lignocellulose) still provides a certain swelling of the lignocellulose to prevent lignocellulose rupture;
c) optionally repeating steps a) and b).

Removing drying agent to extract water (step b)) can be accomplished in various ways. Step b) can include removing drying agent that is present outside the lignocellulose (for example draining a bath of drying agent that soaks the lignocellulose). Also, step b) can include removing part (not all) of drying agent that is present in the lignocellulose.

At least part of the step b) of removing the drying agent can include discharging liquid drying agent from the treatment chamber, for example using a discharge pump. Also, at least part of that step b) can be carried out under sub-atmospheric pressure, and a temperature in the range of 0-200 °C. The pressure and temperature can be such that drying agent (containing dissolved water) evaporates from the lignocellulose. Said sub-atmospheric pressure can be a pressure lower than 0.5 bar, for example about 0.1 bar.

The subjecting lignocellulose to the drying agent (step a)) can be achieved under a predetermined pressure and a temperature in the range of 0-200°C, suitable for the drying agent to penetrate the lignocellulose. For example, during step a), the pressure in the drying chamber can be atmospheric pressure, or higher, for example an elevated pressure with respect to the pressure during removal of the drying agent.

Steps a-c can be carried out such, that resulting lignocellulosic parts have a desired low water content. Particularly, after the drying step 101 and before the modification is started, the water content of the lignocellulose is lower than 5 w%, preferably lower than 3 w%, and most preferably lower than 1 w%.

Also, the resulting lignocellulosic parts still contain liquid drying agent, acting as a swelling agent (having replaced the water during the drying step). For example, the content of the drying agent can be higher than 1 w% after the drying step 101 (and before the modification is started). Various drying agents, having lignocellulose swelling capabilities, can be used (as is mentioned above). A preferred drying agent is a volatile drying agent (for example being volatile at ambient temperature and atmospheric pressure), capable to remove a non-volatile liquid (i.e. being substantially not volatile at ambient and atmospheric pressure, such as water) from the lignocellulose, for example a polar solvent (other than water) that can dissolve water. In case of etherification, as in the present invention, the drying agent can include compounds of an organic (polar) liquid, for example EGDME, propylene oxide, butylene oxide, THF, acetone, small ketones, MEK (methyl ethyl ketone). Propylene oxide is an example of a swelling solvent that can provide both lignocellulose drying and chemical modification (after application of a catalyst). Besides, a solvent drying agent can be used for the extraction of substances from the lignocellulose, after the modification step.

### Modification

The drying step 101 and modification step 102 are consecutive actions preferably carried out in the same treatment chamber. The chamber preferably remains closed from an environment during the drying step 101, during the modification step, and an intermediate period (if any). Thus, the lignocellulose -containing swelling agent- can remain in the treatment chamber throughout the process, so that a certain swollen state of the lignocellulose can be controlled well.

The thus obtained dried lignocellulose (provided by the drying step 101) can be directly used in the modification step 102 as indicated by arrow I in the drawing). Alternatively, part of the liquid drying agent is recovered from the lignocellulose in an intermediate step 105, before the lignocellulose is subjected to the modification step. The recovery of part of the drying agent is carried out such, that the resulting lignocellulose still contains an amount of drying agent acting as swelling agent, which amount is sufficient to prevent lignocellulose rupture.

The modification step 102 can be carried out in different ways. According to a further embodiment the modification can include the use of at least one non-swelling reagent and a swelling agent. Alternatively, the modification can include the use of at least one swelling reagent, used as a drying agent in the drying of the lignocellulose. Also, as an alternative, the modification can include the use of at least one swelling agent acting as reagent, and at least one swelling agent that is not a reagent.

In experiments described below, the modification step 102 is an epoxide based etherification. To this aim, the modification can involve subjecting the lignocellulose to at least one of: an alkylene oxide, for example 1,2-butylene oxide, propylene oxide, styrene oxide; a glycidyl ether, for example allyl glycidyl ether, phenyl glycidyl ether, glycidyl 4-nonylphenyl ether; epoxidized unsaturated fatty acids and their derivatives, for example esters.

Particularly, the modification can involve subjecting the lignocellulosic parts to a reactant and a catalyst. In further embodiments, the catalyst is selected from the group consisting of: alkaline compounds, preferably tertiairy amines, for example dimethylethylamine (DMEA) or triethylamine (TEA), or acidic compounds, for example methanesulfonic acid (MSA).

The etherification is preferably carried out at a temperature in the range of 50-200 °C. Also, good results can be achieved in case the modification is carried out at a pressure in the range of 1-20 bar, for example a pressure of about 1 bar or higher, for example a pressure higher than 5 bar, more particularly a pressure of 8 bar or higher. Preferably, the pressure is lower than 20 bar (for example lower than 15 bar) to prevent damaging the lignocellulose.

The modification step 102 can be followed by a recovery step 103, to recover compounds (for example reagent, swelling agent, and/or catalyst -if any) from the treatment chamber. The recovery step can include drying the lignocellulosic parts (to remove liquids there-from).

For example, a solvent can be used to extract one ore more substances from the lignocellulose after the modification step 102. In an embodiment, such extraction is carried out in the same treatment chamber, as was used in the modification step 102.

Preferably, the lignocellulosic parts are dried (in a further drying step 104) after the modification step 102 (and/or recovery step). This further drying step 104 can include various drying methods, for example oven drying, gas drying, or a different method. Preferably, recovered drying (i.e. swelling) agent is stored, to be reused in a subsequent lignocellulose treatment process.

### Experimental results

Experiments have been carried out using the above-described process. The treatment that is described in this example comprises solvent-drying the lignocellulosic material (wood, in the current examples), followed by reaction of the water-free lignocellulosic material with an epoxide in the presence of a catalyst at desired temperature and pressure. The effect of the treatment on the lignocellulosic material has been evaluated by measuring the anti-swelling efficiency (ASE), the hardness and the susceptibility to fungal attach.

For the experiments slices of *Pinus sylvestris* L. sapwood have been cut with the approximate dimensions 50 x 50 x 5 mm³, unless specified otherwise. This wood has been carefully selected and no growth disturbances (e.g. knots, resin pockets, etc.) have been included in the test material. The wood was carefully planed parallel to the tangential or the radial plane, thus allowing for measurement of dimensions 100% radial or tangential. Prior to treatment the wood has been acclimatised in a specified climate (i.e. 65% r.h. at 20 °C) to achieve a specific starting moisture content, which was found to be 12%. Prior to the tests, the samples were coded with pencil and weighed on a balance to the nearest 0.01 g and measured in both transversal directions with a calliper to the nearest 0.1 mm. On all samples pencil lines have been drawn to facilitate the subsequent measurements of dimensions at exactly the same spot.

In the experiments, the solvent drying (step 101) included removing the water content of the lignocelulosic material by means of a solvent. The solvent was able to swell and penetrate the lignocellulosic material, it was inert, and dissolved the water in order to extract it. The boiling point of the solvent is relatively lower (for example lower than 100 ° C at atmospheric pressure, in a further embodiment lower than 80 ° C at atmospheric pressure) to facilitate later removal. Most preferably, the drying solvent used in step 101 was used as reagent in step 102 in order to minimize the number of components, i.e. the labour that will imply their separation after treatment.

The drying agent was not removed completely prior to reaction (chemical modification, step 102) and it kept the wood swollen to prevent volume changes by shrinking that can occur after water extraction. For example, organic solvents (liquids) such as EGDME, propylene oxide and butylene oxide are able to remove a significant amount of water from the tested wood samples (see Table 1). In particular, it has been found that alkylene oxides such as butylene oxide or propylene oxide can be used as a reagent for the later chemical modification of the lignocellulosic material and - at temperatures lower than 120 °C - it will only react in the presence of a catalyst such as a tertiary amine. EGDME is not only an efficient drying agent as shown in Table 1, but it is also a good swelling agent, as manifested by the results shown in Table 2 (notice the cases of high molecular weight molecules such as phenyl glycidyl ether or epoxidized methylester of natural fatty acids, which are able to penetrate the lignocellulosic structure thanks to the swelling agent).

**Table 1. Experimental conditions employed to solvent-dry wood samples. The percentages of extracted water are listed for each case. (*) Two consecutive drying cycles were carried out under the given conditions.**

| Drying agent | Temperature (°C) | Pressure (MPa) | Time (hours) | RESULTS (% extracted water) |
|---|---|---|---|---|
| EGDME | 120 | 0.8 | 3 | 78 |
| Propylene oxide | 120 | 0.8 | 3 | 72 |
| Propylene oxide | 120 | 1.0 | 3 | 91 |
| Propylene oxide (*) | 70 | 0.4 | 3 | 96 |

In the experiments, several epoxides were investigated and employed in liquid phase (see examples in Table 2). Of special interest for their positive influence in dimensional stability are alkylene oxides such as butylene oxide; glycidyl ethers such as allyl glycidyl ether and phenyl glycidyl ether, styrene oxide and epoxidized methylester of natural fatty acids. With non-swelling reagents (non-polar and/or high molecular weight), a swelling solvent will also be used, to help reagent - and catalyst - enter the cell wall and to remove the surplus after reaction. In that case, the swelling solvent also prevents wood fracture, by swelling the wood to a certain degree.

In the experiments, the solvent drying and the reactions were carried out in a stainless steel reactor. Wood slices have been piled up in a mesh cage and separated with wire meshes. The slices have been secured to prevent floating.

In the experiments, both drying the wood (step 101) and the etherification (step 102) have been carried out by means of respective two consecutive impregnation steps.

A typical impregnation process consisted of a pre-vacuum of about 30 min at 10 kPa, filling of the reactor, either with the drying agent to carry out step 101 or with the solution of reagent and catalysts (up to maximum 80% of the reactor volume) to perform subsequent step 102, application of pressure by adding nitrogen gas up to desired pressure, and heating up, maintaining the temperature for a specified time, cooling down, draining and applying a post vacuum using a cold trap to prevent liquids from going into the vacuum pump. The pressure, the temperature inside the reactor and the temperature of the heating oil have been monitored at intervals of maximum 15 min. At the end of the reaction (step 102) the treated wood samples have been weighed and the dimensions measured.

The temperature was chosen to be as high as possible in order to increase the reaction yield. Pressure could be chosen between 0 and 1.5 MPa, and it was typically around 0.8 MPa.

Catalysts were chosen mainly among the group of weakly alkaline compounds. In particular, tertiary amines were found to be good candidates when using glycidyl ethers or styrene oxide as reagents.

Results achieved by etherification under several experimental conditions are presented in Tables 2 to 6. In particular, Table 2 presents an overview of experimental conditions and the corresponding ASE measured in both tangential and radial wood directions. The effect of the modification treatment on ASE for various wood species (i.e. soft wood - sapwood or heartwood - and hardwood) to a comparable extent is exemplified in Table 3. The comparison between etherified solvent-dried wood and oven-dried wood and the advantages of the first case on ASE values are illustrated in Table 4. Durability with respect to fungal attack, as well as improvements in mechanical properties are shown in Tables 5 and 6, respectively.

### Anti-swelling efficiency (ASE)

**Table 2. Overview of experimental conditions employed for the two steps modification method of Pinus sylvestris L. sapwood slices, as well as the ASE values achieved in each case. The first step corresponds to solvent-drying the wood slices and the second step refers to the chemical modification by etherification with epoxides in the presence of a catalyst, eventually using a solvent in the reaction mixture. Solvent drying temperatures and time were 120 °C and ~ 3 hours, respectively. Reaction temperatures were in the range of 110 - 170 °C and reaction time was ~ 3 hours. ASEs were measured along the radial (Rad) and tangential (Tan) directions of the wood slices.**

| **1^{st} step. Drying agent** | **2^{nd} step: Modification by etherification** | | | **ASE** | |
|---|---|---|---|---|---|
| | **Epoxide (conc. % w/w)** | **Catalyst (conc. % w/w)** | **Solvent** | **Rad** | **Tan** |
| EGDME | Phenyl glycidyl ether (50 %) | TEA (5 %) | EGDME | 85 | 80 |
| EGDME | Allyl glycidyl ether (50 %) | TEA (5 %) | EGDME | 48 | 60 |
| EGDME | Styrene oxide (50 %) | TEA (5 %) | EGDME | 59 | 64 |
| EGDME | Styrene oxide (50%) | DMEA (2 %) | EGDME | 73 | 72 |
| EGDME | Epoxidized methylester of natural fatty acids (50 %) | MSA (0.5 %) | EGDME | 49 | 48 |
| Butylene oxide | Butylene oxide (95%) | TEA (5 %) | ----- | 72 | 54 |

**Table 3. Effect of the treatment on different wood species. ASE measured in the radial (Rad) and tangential (Tan) wood directions, achieved by chemical treatment of slices of various wood species. Slices were solvent dried with EGDME and chemically modified with styrene oxide dissolved in EGDME in the presence of DMEA as catalyst (concentration: 50 %, 48% and 2 %, respectively), at 140 °C and 1 MPa initial pressure. In this case, high ASE values of similar order of magnitude are observed, exemplifying that the modification treatment is capable of improving the dimensional stability of different wood species (i.e. soft wood - sapwood or heartwood - and hardwood) to a comparable extent.**

| **Wood species** | **ASE** | |
|---|---|---|
| | **Rad** | **Tan** |
| *Pinus sylvestris* L. sapwood | 73 | 72 |
| *Pinus sylvestris* L. heartwood | 71 | 73 |
| *Fagus sylvatica* | 71 | 63 |

**Table 4. Comparison of drying methods (oven-dried vs. solvent dried) and their influence on the ASE for similarly modified wood slices. Pinus sylvestris L. sapwood slices were first (oven- or solvent-) dried and then chemically modified with allyl glycidyl ether in the presence of 5% TEA as catalyst, at 120 °C and 0.8 MPa initial pressure. ASEs were measured in the radial (Rad) and tangential (Tan) wood directions, after three water-soaked cycles (1; 2; and 3). The ASEs of modified oven-dried wood are particularly low in the tangential direction, indicating the need of a swelling agent when treating the wood with allyl glycidyl ether. In addition, the functionalization seems to be unstable since ASE values tend to decrease. ASEs of modified solvent-dried wood show positive results in terms of dimensional stability in both tangential and radial directions, which are additionally more stable after several water-soaked cycles than in the previous case.**

| Drying method | Wood moisture content | Wood swelling agent | ASE | | | | | |
|---|---|---|---|---|---|---|---|---|
| | | | Rad1 | Rad2 | Rad3 | Tan1 | Tan2 | Tan3 |
| Oven dried | 0% | None | 76 | 66 | 64 | 36 | 41 | 30 |
| Solvent dried (with EGDME) | <3% | EGDME | 48 | 44 | 50 | 60 | 58 | 60 |

Although the experimental results shown above were achieved on wood slices, preliminary results on wood blocks (50x50x50 cm3) indicate similar ASE values.

### Susceptibility to fungal attack

The durability with respect to fungal attack was evaluated on several modified samples, which were treated by the above-described process using different epoxides. For this purpose, samples have been exposed to the action of *Coniophora puteana* and the weight loss of the samples has been determined systematically after several weeks. In this test, the lower the weight loss of exposed samples compared to non-exposed ones, the higher the resistance to the action of the tested fungus. Ihn order to determine the duration of the test, extra untreated samples, i.e. monitor samples, were also inoculated. Each week two of these monitor samples were removed from the test and the weight loss was determined. In principle, when these samples show a weight loss of 20% or more, the test can be stopped and the weight loss of all samples under study can be determined.

Malt Extract Agar (MEA) medium was prepared and sterilized according to manufacturer's specifications. It was poured into sterile 90x30 mm² petri-dishes. The fungi were subcultured on MEA and incubated at 22°C and 70%RH. Each fungus was treated separately. 37 dishes were inoculated using the subcultured fungi and incubated at 22°C and 70%RH. Due to material availability, only 2 wood samples per etherification test were used. Both samples were cut into 4 peaces of 20x10x5mm³ (radial x tangential x longitudinal, respectively). They were dried at 105°C over night and their dry weight was determined to 0.001g accuracy. Before placing the wood samples into the petri-dishes, they must be sterilized. This is done by autoclaving them at 121°C for 15 minutes, leaving them to cool over night and autoclaving them again at 121°C for 10 minutes the following day. The samples were cooled down before placement. As soon as the fungus has completely covered the agar plate, the wood samples can be placed, which was done on top of spacers that were onto the fungus. Finally, they were incubated at 22°C and 70%RH.

The results are shown in table 5, indicating a good fungal attach resistance for the modified samples.

**Table 5. Moisture content and mass loss of modified wood samples using various epoxides and comparison with reference (unmodified) samples. Moisture content and mass loss measured after 5 weeks exposure to Coniophora puteana.**

| **Epoxides** | **Moisture content (%)** | | **Mass loss (%)** | |
|---|---|---|---|---|
| | Modified wood | Reference | Modified wood | Reference |
| Allyl Glycidyl Ether | 45 | 37 | -4 | 32 |
| Phenyl Glycidyl Ether | 33 | 41 | -1 | 30 |
| Styrene Oxide | 48 | 38 | -6 | 32 |
| Epoxidized methylester of natural fatty acids | 37 | 39 | -2 | 30 |

### Hardness

Modified and unmodified samples were evaluated according to the norm EN 1534, "Wood and parquet flooring - Determination of resistance to indentation (Brinell) - Test method". EN 1534 was developed for wood and parquet flooring; the resistance to indentation is determined by applying a loaded indenter (10 mm iron ball) onto the surface of the test specimen, the load applied to the test specimen is 1 kN. The diameter of the residual indentation is used to evaluate the resistance to indentation of the test specimen.

Prior to measurements, the samples were acclimatised at 65% r.h. and 20 °C. The results shown in Table 6 are average values of 6 samples with dimensions 50x50x5 mm³ measured at 2 positions each.

**Table 6. Brinell hardness of modified wood samples with allyl glycidyl ether, styrene oxide or epoxidized methylester of unsaturated natural fatty acids. The reference value was measured on untreated wood samples obtained from the same wood beam than the treated samples, which have followed the same conditioning exposures.**

| **Epoxides** | **Brinell hardness ( N/mm²)** | **Std. dev. (N/mm²)** |
|---|---|---|
| Allyl glycidyl ether | 81.8 | 7.2 |
| Styrene oxide | 52.9 | 2.6 |
| Epoxidized methylester of natural fatty acids | 56.7 | 2.7 |
| Reference | 45.8 | 1.8 |

### Ultra Violet light (UV) Test results

Samples of pine sapwood, yellow poplar, mahogany, maple and ash were dried with EGDME and treated with styrene oxide with a DMEA catalyst, in a method according to the invention. Another set of samples of the same wood species were dried with EGDME and treated with phenyl glycidyl ether with a DMEA catalyst, in a method according to the invention. A third set of samples of the same wood species were left untreated.

The three sets were subjected to a QUV test for 300 hours. The untreated samples got a silvery grey surface which is typical for untreated wood. Both the styrene oxide and the phenyl glycidyl ether treated wood sample were not or hardly affected by the artificial UV weathering. Thus, material treated with either styrene oxide or phenyl glycidyl ether (using the present invention) is found to be UV resistant.

It is to be understood that in the present application, the term "comprising" does not exclude other elements or steps. Also, each of the terms "a" and "an" does not exclude a plurality. Any reference sign(s) in the claims shall not be construed as limiting the scope of the claims. Also, for example, the term "wood" should be interpreted broadly; a "wood part" can be or include a lignocellulosic part, and vice-versa.

## Claims

1. A method for treating lignocellulosic parts, including:
- drying the lignocellulosic parts, the drying involving removing water, to a water content lower than 5 w%,; wherein the drying is achieved by applying at least one liquid drying agent that dissolves and/or at least partly replaces the water, wherein the drying agent is a lignocellulose swelling agent; and
- after the drying, chemical modification by etherification, of the dried lignocellulosic parts that are swollen by the liquid drying agent,
wherein the drying agent includes a reagent for modification of the lignocellulosic parts, the modification being an epoxide based etherification.

2. The method according to claim 1, wherein the drying involves removing water to a water content lower than 3 w%, preferably lower than 1 w%.

3. The method according to any of the preceding claims, wherein the liquid drying agent penetrates the lignocellulose.

4. The method according to any of the preceding claims, wherein the drying includes:
a) -subjecting the lignocellulose to the drying agent, particularly to impregnate the lignocellulose with that drying agent to dissolve and replace water;
b) -removing only part of the drying agent from the lignocellulose, such that a remaining amount of drying agent provides swelling of the lignocellulose;
c) optionally repeating steps a) and b).

5. The method according to any of the preceding claims, wherein the drying involves saturating the lignocellulosic parts with the drying agent.

6. The method according to any of the preceding claims, wherein the drying agent is selected from propylene oxide, butylene oxide, lower ethers, ethylene glycol dimethylether (EGDME), tetrahydrofuran (THF), small ketones, acetone, MEK (methylethyl ketone), lower esters, methyl-, ethyl-, propyl- and isopropylacetate.

7. The method according to any of the preceding claims, wherein the drying and modification are carried out in the same treatment chamber.

8. The method according to any of the preceding claims, wherein at least part of the drying is carried out under subatmospheric pressure, for example a pressure lower than 0.5 bar, for example about 0.1 bar.

9. The method according to any of the preceding claims, wherein the water content of each lignocellulose part is higher than 5 w% before the drying step.

10. The method according to any of the preceding claims, wherein the modification includes the use of at least one non-swelling reagent and a swelling agent.

11. The method according to any of the claims 1-9, wherein the modification includes the use of at least one swelling reagent, used as a drying agent in the drying of the lignocellulose.

12. The method according to any of the claims 1-9, wherein the modification includes the use of at least one swelling agent acting as reagent, and at least one swelling agent that is not a reagent.

13. The method according to any of the preceding claims, wherein the modification involves subjecting the lignocellulose to at least one of: an alkylene oxide, for example 1,2-butylene oxide, propylene oxide, styrene oxide; a glycidyl ether, for example allyl glycidyl ether, phenyl glycidyl ether, glycidyl 4-nonylphenyl ether; epoxidized unsaturated fatty acids and their derivatives, for example esters.

14. The method according to any of the preceding claims, wherein the modification involves subjecting the lignocellulosic parts to a reactant and a catalyst

15. The method according to claim 14, wherein the catalyst is selected from the group consisting of: alkaline compounds, tertiairy amines, for example dimethylethylamine (DMEA) or triethylamine (TEA), or acidic compounds, for example methane sulfonic acid (MSA).

## Patentansprüche

1. Verfahren zur Behandlung von Lignocelluloseteilen, umfassend:
- das Trocknen der Lignocelluloseteile, wobei das Trocknen das Entziehen von Wasser bis auf einen Wassergehalt unter 5 Gew.-% umfasst; wobei das Trocknen erfolgt, indem mindestens ein flüssiges Trocknungsmittel, welches das Wasser löst und/oder zumindest teilweise ersetzt, angewendet wird, wobei das Trocknungsmittel ein Lignocellulosequellmittel ist; und
- nach dem Trocknen die chemische Modifizierung durch Veretherung der getrockneten Lignocelluloseteile, die durch das flüssige Trocknungsmittel gequollen sind, wobei das Trocknungsmittel ein Reagens zur Modifizierung der Lignocelluloseteile umfasst, wobei die Modifizierung eine Veretherung auf Epoxidharzbasis ist.

2. Verfahren nach Anspruch 1, wobei das Trocknen das Entfernen von Wasser auf einen Wassergehalt unter 3 Gew.-%, bevorzugt unter 1 Gew.-%, umfasst.

3. Verfahren nach einem der vorhergehenden Ansprüche, wobei das flüssige Trocknungsmittel in die Lignocellulose eindringt.

4. Verfahren nach einem der vorhergehenden Ansprüche, wobei das Trocknen umfasst, dass:
a) - die Lignocellulose dem Trocknungsmittel ausgesetzt wird, insbesondere zum Imprägnieren der Lignocellulose mit diesem Trocknungsmittel, um Wasser zu lösen und zu ersetzen;
b) - nur ein Teil des Trocknungsmittels aus der Lignocellulose entfernt wird, sodass eine Restmenge an Trocknungsmittel für das Quellen der Lignocellulose sorgt;
c) - optional die Schritte a) und b) wiederholt werden.

5. Verfahren nach einem der vorhergehenden Ansprüche, wobei das Trocknen das Sättigen der Lignocelluloseteile mit dem Trocknungsmittel umfasst.

6. Verfahren nach einem der vorhergehenden Ansprüche, wobei das Trocknungsmittel aus Propylenoxid, Butylenoxid, niedrigeren Ethern, Ethylenglycoldimethylether (EGDME), Tetrahydrofuran (THF), kleinen Ketonen, Aceton, MEK (Methylethylketon), niedrigeren Estern, Methyl-, Ethyl-, Propyl- und Isopropylacetat, ausgewählt ist.

7. Verfahren nach einem der vorhergehenden Ansprüche, wobei Trocknung und Modifizierung in derselben Behandlungskammer ausgeführt werden.

8. Verfahren nach einem der vorhergehenden Ansprüche, wobei mindestens ein Teil der Trocknung unter subatmosphärischem Druck, zum Beispiel einem Druck unter 0,5 Bar, zum Beispiel ungefähr 0,1 Bar, ausgeführt wird.

9. Verfahren nach einem der vorhergehenden Ansprüche, wobei der Wassergehalt jedes Lignocelluloseteiles vor dem Trocknungsschritt höher als 5 Gew.-% ist.

10. Verfahren nach einem der vorhergehenden Ansprüche, wobei die Modifizierung die Verwendung von mindestens einem nicht quellenden Reagens und einem Quellmittel umfasst.

11. Verfahren nach einem der Ansprüche 1-9, wobei die Modifizierung die Verwendung von mindestens einem Quellreagens, verwendet als ein Trocknungsmittel beim Trocknen der Lignocellulose, umfasst.

12. Verfahren nach einem der Ansprüche 1-9, wobei die Modifizierung die Verwendung von mindestens einem Quellmittel, das als Reagens dient, und mindestens einem Quellmittel, das kein Reagens ist, umfasst.

13. Verfahren nach einem der vorhergehenden Ansprüche, wobei die Modifizierung umfasst, dass die Lignocellulose mindestens einem der Folgenden ausgesetzt wird: einem Alkylenoxid, zum Beispiel 1,2-Butylenoxid, Propylenoxid, Styrenoxid; einem Glycidylether, zum Beispiel Allylglycidylether, Phenylglycidylether, Glycidyl-4-nonylphenylether; epoxidierten ungesättigten Fettsäuren und deren Derivaten, wie zum Beispiel Estern.

14. Verfahren nach einem der vorhergehenden Ansprüche, wobei die Modifizierung umfasst, dass die Lignocelluloseteile einem Reaktionsmittel und einem Katalysator ausgesetzt werden.

15. Verfahren nach Anspruch 14, wobei der Katalysator ausgewählt ist aus der Gruppe, bestehend aus: Alkalinverbindungen, Tertiäraminen, zum Beispiel Dimethylethylamin (DMEA) oder Triethylamin (TEA), oder sauren Verbindungen, zum Beispiel Methansulfonsäure (MSA).

## Revendications

1. Procédé pour traiter des parties lignocellulosiques, consistant à :
- sécher les parties lignocellulosiques, le séchage impliquant un enlèvement d'eau, jusqu'à une teneur en eau inférieure à 5 % en poids ; dans lequel le séchage est réalisé en appliquant au moins un agent de séchage liquide qui dissout et/ou au moins remplace partiellement l'eau, dans lequel l'agent de séchage est un agent de gonflement de lignocellulose ; et
- après séchage, modification chimique par éthérification, des parties lignocellulosiques séchées qui sont gonflées par l'agent de séchage liquide, dans lequel l'agent de séchage comprend un réactif de modification des parties lignocellulosiques, la modification étant une éthérification à base d'époxyde.

2. Procédé selon la revendication 1, dans lequel le séchage implique un enlèvement d'eau jusqu'à une teneur en eau inférieure à 3 % en poids, de préférence inférieure à 1 % en poids.

3. Procédé selon l'une quelconque des revendications précédentes, dans lequel l'agent de séchage liquide pénètre dans la lignocellulose.

4. Procédé selon l'une quelconque des revendications précédentes, dans lequel le séchage consiste à :
a) - soumettre la lignocellulose à l'agent de séchage, en particulier pour imprégner la lignocellulose avec cet agent de séchage pour dissoudre et remplacer l'eau ;
b) - enlever seulement une partie de l'agent de séchage à partir de la lignocellulose, de sorte qu'une quantité restante d'agent de séchage assure un gonflement de la lignocellulose ;
c) facultativement répéter les étapes a) et b).

5. Procédé selon l'une quelconque des revendications précédentes, dans lequel le séchage implique une saturation des parties lignocellulosiques avec l'agent de séchage.

6. Procédé selon l'une quelconque des revendications précédentes, dans lequel l'agent de séchage est sélectionné à partir d'oxyde de propylène, d'oxyde de butylène, d'éthers inférieurs, de diméthyléther d'éthylène glycol (EGDME), tétrahydrofurane (THF), des petites cétones, de l'acétone, MEK (cétone méthyléthylique) esters inférieurs, méthyl-, éthyl-, propyl- et iso propylacétate.

7. Procédé selon l'une quelconque des revendications précédentes, dans lequel le séchage et la modification sont effectués dans la même chambre de traitement.

8. Procédé selon l'une quelconque des revendications précédentes, dans lequel au moins une partie du séchage est effectuée sous une pression en dessous de l'atmosphérique, par exemple une pression inférieure à 0,5 bar, par exemple d'environ 0,1 bar.

9. Procédé selon l'une quelconque des revendications précédentes, dans lequel la teneur en eau de chaque partie de lignocellulose est plus grande que 5 % en poids avant l'étape de séchage.

10. Procédé selon l'une quelconque des revendications précédentes, dans lequel la modification inclut l'utilisation d'au moins un réactif ne gonflant pas et un agent de gonflement.

11. Procédé selon l'une quelconque des revendications 1 à 9, dans lequel la modification inclut l'utilisation d'au moins un agent de gonflement, utilisé comme agent de séchage dans le séchage de la lignocellulose.

12. Procédé selon l'une quelconque des revendications 1 à 9, dans lequel la modification inclut l'utilisation d'au moins un agent de gonflement agissant comme réactif, et au moins un agent de gonflement qui n'est pas un réactif.

13. Procédé selon l'une quelconque des revendications précédentes, dans lequel la modification implique de soumettre la lignocellulose à au moins un parmi : un oxyde d'éthylène, par exemple oxyde de 1,2-butylène, oxyde de propylène, oxyde de styrène ; un éther de glucidyle, par exemple un éther d'allyle et de glycidyle, un éther de phényle et de glycidyle, un éther de 4-nonyl phényle glycidylique ; des acides gras insaturés époxydés et leurs dérivés, par exemple des esters.

14. Procédé selon l'une quelconque des revendications précédentes, dans lequel la modification implique de soumettre les parties lignocellulosiques à un réactif et un catalyseur.

15. Procédé selon la revendication 14, dans lequel le catalyseur est sélectionné parmi le groupe constitué de : composés alcalins, amine tertiaire, par exemple diméthyléthylamine (DMEA) ou triéthylamine (TEA), ou de composés acides, par exemple l'acide méthanesulfonique (MSA).
